# EUROPEAN PATENT APPLICATION

(11) **EP 4 783 616 A1**
(43) Date of publication of application: **29.07.2026**
(21) Application number: 24867339.4
(22) Date of filing: 11.09.2024
(51) Int. Cl.: H04W 4/02

(54) **TRANSMISSION METHOD AND APPARATUS, DEVICE, AND READABLE STORAGE MEDIUM**

(30) Priority: 18.09.2023 CN 202311203834
(71) Applicant: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN); YU, Hang, Dongguan, Guangdong 523863 (CN); WU, Xiaobo, Dongguan, Guangdong 523863 (CN)
(74) Representative: Walaski, Jan Filip
(86) International application number: PCT/CN2024/118099
(87) International publication number: WO 2025/060927

(57) **Abstract**

The present application discloses a transmission method and apparatus, a device, and a readable storage medium. The method comprises : a first communication device transmits first information to a second communication device, wherein the first information is used for requesting location-related data corresponding to a third communication device; the first communication device receives second information from the second communication device, wherein the second information comprises the location-related data corresponding to the third communication device, and the first information comprises at least one of the following: third information, used for indicating the data type of the requested location-related data; fourth information, used for indicating information of a device for generating the location-related data; and fifth information, used for indicating a collection mode of the requested location-related data.

## Description

### CROSS-REFERENCE TO RELATED APPLICATIONS

The present application claims priority to Chinese Patent Application No. 202311203834.8, filed in China on September 18, 2023, which is incorporated herein by reference in its entirety.

### TECHNICAL FIELD

The present application pertains to the field of communication technologies and specifically relates to a transmission method and apparatus, a device, and a readable storage medium.

### BACKGROUND

A channel between the network data analytics function (Network Data Analytics Function, NWDAF) via the gateway mobile location center (Gateway Mobile Location Center, GMLC), access and mobility management function (Access and Mobility Management Function, AMF), and location management function (Location Management Function, LMF) can only be used to request and obtain location information, which does not cover data types such as positioning measurement data. As a result, the NWDAF is unable to obtain sufficient data types from the LMF.

### SUMMARY

Embodiments of the present application provide a transmission method and apparatus, a device, and a readable storage medium to solve the problem of how the network side obtains location-related data.

A first aspect provides a transmission method, including:
sending, by a first communication device, first information to a second communication device, the first information being used to request location-related data corresponding to a third communication device; and
receiving, by the first communication device, second information from the second communication device, the second information including the location-related data corresponding to the third communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

A second aspect provides a transmission method, including:
receiving, by a second communication device, first information from a first communication device, the first information being used to request location-related data corresponding to a third communication device; and
sending, by the second communication device, second information to the first communication device, the second information including the location-related data corresponding to the third communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

A third aspect provides a transmission method, including:
receiving, by a fourth communication device, first information sent by a first communication device, the first information being used to request location-related data corresponding to a third communication device;
sending, by the fourth communication device, the first information to a second communication device;
receiving, by the fourth communication device, second information from the second communication device, the second information including the location-related data corresponding to the third communication device; and
sending, by the fourth communication device, the second information to the first communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

A fourth aspect provides a transmission apparatus, including:
a first sending module, configured to send first information to a second communication device, the first information being used to request location-related data corresponding to a third communication device; and
a first receiving module, configured to receive second information from the second communication device, the second information including the location-related data corresponding to the third communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

A fifth aspect provides a transmission apparatus, including:
a second receiving module, configured to receive first information from a first communication device, the first information being used to request location-related data corresponding to a third communication device; and
a second sending module, configured to send second information to the first communication device, the second information including the location-related data corresponding to the third communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

A sixth aspect provides a transmission apparatus, including:
a third receiving module, configured to receive first information sent by a first communication device, the first information being used to request obtaining location-related data corresponding to a third communication device;
a third sending module, configured to send the first information to a second communication device;
a fourth receiving module, configured to receive second information from the second communication device, the second information including the location-related data corresponding to the third communication device; and
a fourth sending module, configured to send the second information to the first communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

A seventh aspect provides a communication device including: a processor, a memory, and a program or instructions stored on the memory and executable on the processor, where the program or instructions, when executed by the processor, implement the steps of the method as described in the first aspect or the second aspect or the third aspect.

An eighth aspect provides a readable storage medium, where the readable storage medium stores a program or instructions, and the program or instructions, when executed by a processor of a communication device, implement the steps of the method as described in the first aspect or the second aspect or the third aspect.

A ninth aspect provides a chip, where the chip including a processor and a communication interface, the communication interface is coupled with the processor, the processor is configured to run a program or instructions to implement the steps of the method as described in the first aspect or the second aspect or the third aspect.

A tenth aspect provides a computer program/program product, where the computer program/program product is stored in a non-transitory storage medium, and the program/program product is executed by at least one processor to implement the steps of the method as described in the first aspect or the second aspect or the third aspect.

An eleventh aspect provides a communication system, where the communication system includes a communication device, the communication device is configured to perform the steps of the method as described in the first aspect or the second aspect or the third aspect.

In the embodiments of the present application, a first communication device may obtain location-related data corresponding to a third communication device from a second communication device in a request or subscription manner, enabling a network side to obtain the location-related data, and further enabling the network side to use the location-related data for operations such as model training.

### BRIEF DESCRIPTION OF DRAWINGS

FIG. 1 is a schematic architectural diagram of a wireless communication system according to an embodiment of the present application;
FIG. 2 is a first flowchart of a transmission method according to an embodiment of the present application;
FIG. 3 is a second flowchart of a transmission method according to an embodiment of the present application;
FIG. 4 is a third flowchart of a transmission method according to an embodiment of the present application;
FIG. 5 is a fourth flowchart of a transmission method according to an embodiment of the present application;
FIG. 6 is a fifth flowchart of a transmission method according to an embodiment of the present application;
FIG. 7 is a first schematic diagram of a transmission apparatus according to an embodiment of the present application;
FIG. 8 is a second schematic diagram of a transmission apparatus according to an embodiment of the present application;
FIG. 9 is a third schematic diagram of a transmission apparatus according to an embodiment of the present application;
FIG. 10 is a first schematic diagram of a communication device according to an embodiment of the present application; and
FIG. 11 is a second schematic diagram of a communication device according to an embodiment of the present application.

### DETAILED DESCRIPTION OF EMBODIMENTS

The following clearly describes the technical solutions in the embodiments of the present application with reference to the accompanying drawings in the embodiments of the present application. Apparently, the described embodiments are only some rather than all of the embodiments of the present application. All other embodiments obtained by persons of ordinary skill in the art based on the embodiments of the present application shall fall within the protection scope of the present application.

The terms "first", "second", and the like in the present application are used to distinguish between similar objects instead of describing a specific order or sequence. It should be understood that terms used in this way are interchangeable in appropriate circumstances so that the embodiments of the present application can be implemented in other orders than the order illustrated or described herein. In addition, "first" and "second" are usually used to distinguish objects of a same type, and do not restrict a quantity of objects. For example, there may be one or a plurality of first objects. In addition, the term "or" in the present application indicates at least one of the connected objects, for example, "A or B" encompasses three scenarios: scenario one, including A but not B; scenario two, including B but not A; and scenario three, including both A and B. The character "/" generally represents an "or" relationship between the associated objects.

The term "indication" in the present application may be either a direct indication (or explicit indication) or an indirect indication (or implicit indication). The direct indication can be understood as the sender explicitly informing the receiver of specific information, operations to be performed, or request results in the sent indication; and the indirect indication can be understood as the receiver determining the corresponding information according to the indication sent by the sender, or making a judgment and determining the operations to be performed or request results according to the judgment result.

It should be noted that technologies described in the embodiments of the present application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), or other systems. The terms "system" and "network" in the present application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system scenario, for example, the 6^{th} generation (6^{th} Generation, 6G) communication system.

For understanding the embodiments of the present application, the following technical points are described.

### 1. Introduction to NWDAF.

The NWDAF is a network data analytics function network element that supports collecting data related to network elements or terminals and provides information such as statistics and predictions. The NWDAF can collect data from network elements such as AMF and session management function (Session Management Function, SMF), or from the operations, administration and maintenance (Operations, Administration and Maintenance, OAM) system. In the process of related technologies, the NWDAF obtains location information of a terminal through collection by the AMF, and the location information of the terminal is coarse-grained, at the tracking area (Tracking Area, TA) or cell (cell) level, that is, the NWDAF can learn from the AMF which cell or TA the terminal is currently located in.

If an NWDAF consumer (consumer) initiates a service request to the NWDAF to request the NWDAF to provide statistical results or prediction conclusions of related information, the NWDAF will collect information from different network elements based on a parameter in the request message, and return a result to the NWDAF consumer after performing statistics and analysis.

### 2. Introduction to location service (Location Service, LCS).

The location service is executed and provided by network elements such as AMF and LMF in the core network. LCS messages are exchanged between a terminal and an LCS client (client) or application function (Application Function, AF). A typical process is the mobile terminated location request (Mobile Terminated Location Request, MT-LR).

The MT-LR process is initiated by an external third-party application (for example, LCS client) or by the AF via a network exposure function (Network Exposure Function, NEF) network element, and finally obtains the location information of the terminal via network elements such as GMLC, AMF, and LMF.

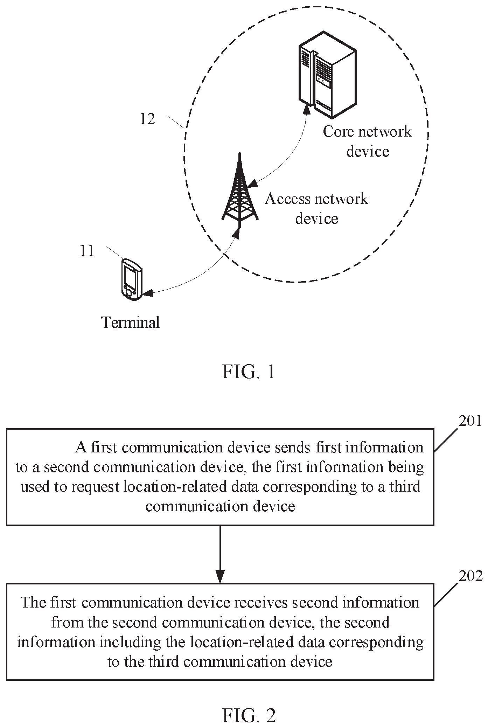

FIG. 1 is a block diagram of a wireless communication system to which the embodiments of the present application are applicable. The wireless communication system includes a terminal 11 and a communication device 12.

The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-Mobile Personal Computer, UMPC), a mobile internet device (Mobile Internet Device, MID), an augmented reality (Augmented Reality, AR)/virtual reality (virtual reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, or a vehicle unit. In addition to the above terminal devices, the terminal in the present application may alternatively be a chip within the terminal, such as a modem (Modem) chip or a system on chip (System on Chip, SoC) It should be noted that the embodiments of the present application do not impose any limitation on a specific type of the terminal 11.

The communication device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Networks, WLAN) access point (Access Point, AS), a wireless fidelity (Wireless Fidelity, Wi-Fi) node, or the like. The base station may be referred to as a Node B (Node B, NB), an evolved Node B (evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B, a transmission reception point (Transmission Reception Point, TRP), or other appropriate terms in the field, provided that the same technical effect is achieved. The base station is not limited to specific technical terms. It should be noted that in the embodiments of the present application, the base station in the NR system is used as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of the present application are described with only the core network device in the NR system as an example, but the core network device is not limited to any specific type.

The transmission method and apparatus, communication device, and readable storage medium according to the embodiments of the present application are described below in detail through some embodiments and application scenarios with reference to the accompanying drawings.

Referring to FIG. 2, an embodiment of the present application provides a transmission method applied to a first communication device, with specific steps including: step 201 and step 202.

Step 201: The first communication device sends first information to a second communication device, the first information being used to request location-related data corresponding to a third communication device.

That the first communication device sends first information to a second communication device can be understood as: the first communication device directly sends the first information to the second communication device, or the first communication device sends part or all of the content contained in the first information to the second communication device via another communication device (or via interaction between other communication devices), where the part or all content may be converted based on the corresponding content in the first information, and may not be completely the same in presentation form. For example, user equipment (User Equipment, UE) identifier information may be converted from a generic public subscription identifier (Generic Public Subscription Identifier, GPSI) to a subscription permanent identifier (Subscription Permanent Identifier, SUPI), and area information may be converted from geographic area information to corresponding network cell information.

In one implementation of the present application, that the first communication device sends first information to a second communication device includes:
the first communication device sends the first information to the second communication device via a fourth communication device.

Optionally, the fourth communication device includes a GMLC or an AMF, for example, the first communication device sends the first information to the second communication device via the GMLC, or for example, the first communication device sends the first information to the second communication device via the GMLC and AMF. For example, the first communication device sends the first information to the GMLC, the GMLC sends sixth information to the AMF, and the AMF sends seventh information to the second communication device, where the sixth information and the seventh information include part or all of the content in the first information (that is, the sixth information and the seventh information include at least part of the content in the first information). Optionally, the content of the sixth information may be configured based on the content of the first information; optionally, the content of the seventh information may be configured based on the content in the first information or the sixth information; optionally, the first communication device sends part or all of the content of the first information to the second communication device via interaction with the GMLC, interaction between the GMLC and the AMF, and interaction between the AMF and the second communication device.

Optionally, the first information includes at least one of the following information: (1) to (3).
(1) Third information, the third information being used to indicate a data type of the requested location-related data.

Optionally, the third information may also be used to indicate a data type of the location-related data to be collected, or to indicate a target data type that needs to be included in the location-related data fed back by the second communication device.
(2) Fourth information, the fourth information being used to indicate information of a device that generates the location-related data.

Optionally, the device that generates the location-related data may also be referred to as a target device, or target data device, or target data generation device, or target data collection device.

It should be noted that, in the present application, collecting and gathering have similar meanings and may be used interchangeably.

It should be noted that, in the present application, generating and producing have similar meanings and may be used interchangeably.

Optionally, the fourth information may also be used to indicate information of a device that collects the location-related data, or that the location-related data fed back by the second communication device needs to include data generated by the target device.

Optionally, the device that generates the location-related data may include at least one of the following: an LMF, a radio access network (Radio Access Network, RAN) node, UE, a positioning reference unit (Positioning Reference Unit, PRU), and the like; for example, the LMF may generate location information, the LMF may collect measurement data, location information, intermediate feature data, assistance data, and the like; the RAN node may generate and collect measurement data; and the UE and PRU may generate measurement data, location information, intermediate feature data, and the UE and PRU may collect measurement data, location information, intermediate feature data, assistance data, and the like;

Optionally, the information of the device includes but is not limited to at least one of the following: (a) identifier information of the device, such as identity (Identity, ID) information, or internet protocol (Internet Protocol, IP) address, or fully qualified domain name (Fully Qualified Domain Name, FQDN) information, etc.; and (b) type information of the device, for example, the type information includes but is not limited to UE, PRU, RAN, and LMF.
(3) Fifth information, the fifth information being used to indicate a collection manner of the requested location-related data.

Optionally, the collection manner includes at least one of the following: (a) to (e).

### (a) Non-active data collection.

The non-active data collection may also be referred to as non-active triggered positioning-based data collection or passive data collection. That is, after receiving the first information, no additional positioning interaction is triggered due to the first message, but positioning interaction is performed based on the trigger conditions described in the related technology, then data collection is performed on the location-related data generated during the interaction process, and data reporting is performed after the conditions are met. The positioning interaction process may occur in the past time period, current time period, or future time period.

### (b) Active data collection.

The active data collection may also be referred to as active triggered positioning-based data collection or passive data collection. That is, after receiving the first information, one or more positioning interactions can be actively triggered to obtain the location-related data and report it. The positioning interaction process may be triggered immediately after receiving the first message, or triggered at a future time point.

### (c) Historical data collection.

The historical data collection is used to indicate collecting historical data.

### (d) Immediate data collection.

The immediate data collection is used to indicate collecting current data.

### (e) Future data collection.

The future data collection is used to indicate collecting future data.

Optionally, the first information further includes at least one of the following: (1) to (8).
(1) Filter information (filter information) of the location-related data, used to indicate conditions that the location-related data needs to satisfy;

Optionally, the filter information of the location-related data may also be directly called filter information, but it is embodied in the context as filter information for the location-related data.

It should be noted that, in the present application, location-related data and location data have similar meanings and may be used interchangeably.

Optionally, the filter information includes at least one of the following: time information and reporting condition information.

Optionally, the time information is used to indicate a time range or time node or timestamp of the requested location-related data, for example, location-related data corresponding to a certain past time period, or location-related data corresponding to a certain future time period, or location-related data corresponding to a certain future time node, or location-related data of the current time.

Optionally, the reporting condition information is used to indicate conditions for reporting the location-related data, such as periodic reporting or bulk (Bulk) reporting of the location-related data, for example, reporting the location-related data once every certain period of time, or reporting after collecting a certain amount of location-related data based on the data volume.

It should be noted that the reporting may be performed by feeding back the first information; for example, when the first information is a request message, data reporting may be implemented by feeding back a response message to the request message; and when the first information is a subscription message, data reporting may be implemented by sending a notification message to the notification target address.

Optionally, the reporting condition information may include but is not limited to at least one of the following: immediate (reporting), periodic (reporting), bulk (reporting), and the like. For example, when the reporting condition information includes immediate reporting, the second communication device immediately sends the second information and the like; when the reporting condition information includes periodic reporting, it may include: periodic reporting indication information or periodic interval duration; where the periodic reporting indication information is used to indicate the second communication device to perform periodic reporting; and the periodic interval duration is used to indicate the interval time for periodic reporting, that is, how long the interval is for one periodic reporting, that is, sending the second information; for example, performing periodic reporting, that is, the first communication device performs periodic reporting of data once every periodic interval duration; and when the reporting condition information includes bulk reporting, it may include: bulk reporting indication information (bulk indication) or bulk reporting data amount; where the bulk reporting indication information is used to indicate performing bulk reporting; and the bulk reporting data amount (bulk data amount) is used to indicate the amount of data that needs to be accumulated for data reporting; for example, after the second communication device collects a certain amount of data, when the collected data amount reaches the bulk reporting data amount requirement, bulk (Bulk) reporting and the like is performed.

(2) Notification target address (Notification Target Address).

The notification target address indicates the address of the target device for reporting the location-related data, for example, the target device may include but is not limited to the first communication device.

It should be noted that, in the present application, reporting and notification have similar meanings and may be used interchangeably.

(3) Tenth information, the tenth information being used to indicate that the type of the message carrying the first information is a request message.

(4) Eleventh information, the eleventh information being used to indicate that the type of the message carrying the first information is a subscription message.

It should be noted that the tenth information and the eleventh information may be direct indications (or explicit indications) or indirect indications (or implicit indications). For example, the implicit indication may be embodied in the service name of the first information;

(5) Subscription correlation ID (subscription correlation ID) or notification correlation ID (Notification Correlation ID).

The subscription correlation ID or notification correlation ID is used to indicate that the first information is related to a certain subscription message. It may associate the received first information with the subscription corresponding to the subscription correlation ID or notification correlation ID.

(6) One or more UE identifiers (UE ID).

The UE identifier is used to indicate that the requested location-related data is related to the target terminal corresponding to the UE identifier. For example, the requested location-related data is the location-related data corresponding to the UE corresponding to the UE ID. The number of UE IDs is not limited in this embodiment.

(7) Group ID (group ID).

The group ID is used to indicate that the requested location-related data is related to a group of UEs corresponding to the group ID, for example, the requested location-related data is the location-related data corresponding to a group of UEs corresponding to the group ID.

(8) Identifier information of the third communication device.

The identifier information of the third communication device may be a UE identifier or a group ID.

Optionally, the identifier information of the third communication device may also be a location service association identifier and the like.

It should be noted that the third communication device corresponds to the UE identifier or the group ID. For example, the third communication device may be determined through the UE identifier or the group ID.

Optionally, the first communication device includes but is not limited to an NWDAF, a model training logic function (Model Training Logic Function, MTLF), or an analytic logic function (Analytic Logic Function, AnLF), the second communication device includes but is not limited to an LMF, and the third communication device includes but is not limited to a positioning reference unit (Positioning Reference Unit, PRU) or a terminal.

In one implementation of the present application, the location-related data includes numerical information of the location-related data. For example, the numerical information may be a number represented by the specified location-related data, etc.

Optionally, the location-related data may be channel impulse response, power delay profile, delay profile, reference signal received power, reference signal received power path, received signal time difference, cell identification, tracking area granularity, geographic location, cell information, civic information, latitude and longitude position, time of arrival, path phase, reference signal configuration information, radio signal configuration information, reference cell information, neighboring cell information, search time window of reference signal time difference (Reference Signal Time Difference RSTD), and the like.

Optionally, the numerical information may be embodied in different ways, such as Boolean (boolean), floating point number, integer, decimal, or string form. For example, an embodiment of the numerical information may be determined based on the content carried in the first information, and the present application does not limit the specific form of the numerical information.

Optionally, the location-related data may be used for model training, for example, for model training of artificial intelligence (Artificial Intelligence, AI) positioning service.

Optionally, the location-related data may be used for model inference, for example, for model inference of AI positioning service.

For example, the first communication device performs model training related to positioning service or model inference related to positioning service based on the location-related data, for example, the first communication device inputs the numerical information of the location-related data into the AI positioning model as input data, thereby obtaining one or more training results or inference results.

Optionally, the location-related data further includes at least one of the following (1) to (4):
(1) Data name of the location-related data.

The data name of the location-related data may be used to indicate the data type contained in the location-related data.

Optionally, the data name of the location-related data may be used to indicate the data type corresponding to the numerical information of the location-related data.

For example, the data name of the location-related data may include but is not limited to channel impulse response, power delay profile, delay profile, reference signal received power, reference signal received power path, received signal time difference, cell identification, tracking area granularity, geographic location, cell information, civic information, latitude and longitude position, time of arrival, path phase, reference signal configuration information, radio signal configuration information, reference cell information, neighboring cell information, and search time window of RSTD.

(2) Data type.

The data type may be positioning measurement data, location information accuracy, location information, intermediate feature data, or positioning assistance data, or the like.

Optionally, the data type may be used to indicate the data type corresponding to the numerical information of the location-related data.

(3) Time information.

The time information is a time corresponding to the location-related data needed, such as a time when the location-related data is generated, or a time when the location-related data is collected.

(4) Data source information.

Optionally, the data source information is used to indicate that it is the location-related data generated by the PRU; or the data source information is used to indicate that it is the location-related data generated by the UE or LMF; or the data source information is used to indicate that it is the location-related data generated by the RAN node.

Step 202: The first communication device receives second information from the second communication device, the second information including the location-related data corresponding to the third communication device.

That the first communication device receives the second information from the second communication device may be understood as: the first communication device receives the content in the second information sent by the second communication device. For example, the first communication device may directly receive the second information sent by the second communication device, or the first communication device may receive part or all of the content of the second information sent by the second communication device via another communication device (or via interaction between other communication devices).

In one implementation of the present application, that the first communication device receives second information from the second communication device includes:
the first communication device receives the second information from the second communication device via the fourth communication device.

Optionally, the fourth communication device includes a GMLC or an AMF, for example, the fourth communication device receives the second information from the second communication device via the GMLC, or for example, the first communication device sequentially receives the second information from the second communication device via the GMLC and AMF. For example, the second communication device sends the second information to the AMF, the AMF sends eighth information to the GMLC, and the GMLC sends ninth information to the first communication device, where the eighth information and the ninth information include part or all of the content in the second information. Optionally, the content of the eighth information may be configured based on the content of the second information, and the content of the ninth information may be configured based on the content in the second information or the eighth information. Optionally, the first communication device receives part or all of the content of the second information from the second communication device via interaction with the GMLC, interaction between the GMLC and the AMF, and interaction between the AMF and the second communication device.

In one implementation of the present application, the second information further includes at least one of the following: (1) to (3).
(1) Data type corresponding to the location-related data.
(2) Device corresponding to the location-related data.

Optionally, the device corresponding to the location-related data includes at least one of the following: an RAN node, a PRU, a terminal, and an LMF.

(3) Collection manner corresponding to the location-related data.

Optionally, the second information may further include filter information corresponding to the location-related data.

Optionally, the second information may also include identifier information of the third communication device corresponding to the location-related data.

Optionally, the identifier information of the third communication device may be a location service association identifier, UE identifier, group ID, or the like.

In one implementation of the present application, the data type includes at least one of the following: (1) to (5).
(1) Positioning measurement data.

The positioning measurement data is data used for measurement during the positioning process. Devices such as an LMF and UE may perform calculation based on the positioning measurement data to obtain location information. For example, a device such as UE and RAN may also obtain intermediate feature data based on the positioning measurement data.

Optionally, the positioning measurement data may include but is not limited to at least one of the following: channel impulse response (Channel Impulse Response, CIR), power delay profile (Power Delay Profile, PDP), delay profile (Delay Profile, DP), reference signal received power (Reference Signal Received Power, RSRP), reference signal received power path (Reference Signal Received Power Path, RSRPP), or reference signal time difference (Reference Signal Time Difference, RSTD).

(2) Location information accuracy.

Optionally, the location information accuracy may also be the granularity corresponding to the location information.

Optionally, the location information accuracy includes but is not limited to at least one of the following: cell ID (Cell ID), or tracking area granularity (TA granularity).

Optionally, the location information accuracy may also include at least one of the following: cell granularity, geographic granularity, latitude and longitude granularity, or city granularity.

(3) Location information.

Optionally, the location information may be understood as indication information for requesting to obtain location information, or that the location-related data needs to include location information.

Optionally, the location information may include but is not limited to at least one of the following: geodetic location (geodetic location), latitude and longitude position, cell information, or civic information (civic location).

(4) Intermediate feature data (Intermediate features), the intermediate feature data being data obtained based on measurement data for generating location information.

Optionally, the intermediate feature data includes but is not limited to at least one of the following: time of arrival (Time of Arrival, TOA), or path phase (path phase).

The path phase (path phase) refers to the phase shift experienced by the signal during propagation, which can represent the effects of multipath interference and delay spread on the signal during transmission.

(5) Positioning assistance data.

The positioning assistance data is data that may be used to assist positioning.

Optionally, the positioning assistance data may include but is not limited to at least one of the following: reference signal configuration information (RS configuration), radio signaling (Radio signaling) configuration information, reference cell information, neighboring cell information, and search time window of RSTD.

It should be noted that the information in the data type may appear in combination, such as measurement data or CIR data, location information, location information accuracy, or the like.

In one implementation of the present application, the method further includes:
performing, by the first communication device, model training related to positioning service based on the location-related data; or performing, by the first communication device model inference related to positioning service based on the location-related data.

Optionally, the model includes an AI model or a machine learning (Machine Learning, ML) model.

In this embodiment of the present application, the first communication device may obtain the location-related data corresponding to the third communication device from the second communication device in a request or subscription manner, enabling the network side to obtain location-related data, and further enabling the network side to use the location-related data for operations such as model training.

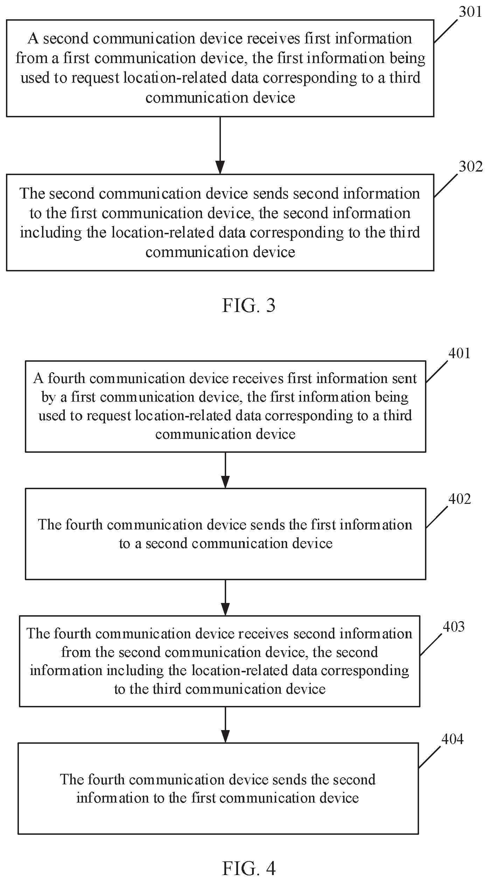

Referring to FIG. 3, an embodiment of the present application provides a transmission method applied to a second communication device, with specific steps including: step 301 and step 302.

Step 301: The second communication device receives first information from a first communication device, the first information being used to request location-related data corresponding to a third communication device.

Optionally, the first information includes at least one of the following: third information, the third information being used to indicate a data type of the requested location-related data; fourth information, the fourth information being used to indicate information of a device that generates the location-related data; and fifth information, the fifth information being used to indicate a collection manner of the requested location-related data; optionally, the first information further includes at least one of the following:
(1) filter information of the location-related data, used to indicate conditions that the location-related data needs to satisfy;
(2) notification target address (Notification Target Address).
(3) tenth information, the tenth information being used to indicate that the type of the message carrying the first information is a request message;
(4) eleventh information, the eleventh information being used to indicate that the type of the message carrying the first information is a subscription message;
(5) subscription correlation identification;
(6) one or more UE identifiers (UE ID);
(7) group identifier (group ID); and
(8) identifier information of the third communication device.

That the second communication device receives first information from a first communication device can be understood as: the second communication device receives the content carried in the first information sent by the first communication device. For example, the second communication device directly receives the first information sent by the first communication device, or the second communication device receives part or all of the content of the first information sent by the first communication device through other communication devices (or interactions between other communication devices).

Step 302: The second communication device sends second information to the first communication device, the second information including the location-related data corresponding to the third communication device.

Optionally, before step 302, the second communication device obtains the location-related data based on the first information.

The second communication device obtaining the location-related data based on the first information can be the second communication device obtaining the location-related data that satisfies the information contained in the first information based on the first information. For example, when the first information includes the third information, the second communication device obtains the location-related data that satisfies the data type indicated by the third information; or for example, when the first information includes the fourth information, the second communication device obtains the location-related data generated by the device indicated by the fourth information; or for example, when the first information includes filter information of the location-related data, the second communication device obtains the location-related data that satisfies the filter information of the location-related data.

It should be noted that the manner in which the second communication device obtains the location-related data can be determined based on the first information, such as based on the collection manner indicated by the fifth information in the first information, or the filter information of the location-related data. For example, when the collection manner in the fifth information is active data collection, the second communication device needs to actively trigger positioning and other interactions to obtain the location-related data; or for example, when the filter information of the location-related data includes time information, and the time information is historical time, that is, past time information, the second communication device selects the location-related data that satisfies the conditions, such as satisfying the time information or within the time information range.

That the second communication device sends the second information to the first communication device can be understood as: the second communication device sends part or all of the content in the second information to the first communication device. For example, the second communication device directly sends the second information to the first communication device, or the second communication device sends part or all of the content of the second information to the first communication device via another communication device (or via interaction between other communication devices).

Optionally, the first communication device includes but is not limited to an NWDAF, an MTLF, or an AnLF.

Optionally, the second communication device includes but is not limited to an LMF.

Optionally, the third communication device includes but is not limited to a PRU or a terminal.

In one implementation of the present application, that the second communication device receives first information from a first communication device includes:
the second communication device receives the first information from the first communication device via a fourth communication device.

For example, the fourth communication device includes a GMLC or an AMF, for example, the second communication device receives the first information from the first communication device via the GMLC, or for example, the second communication device receives part or all of the content of the first information from the first communication device via the GMLC and AMF. For example, the first communication device sends the first information to the GMLC, the GMLC sends sixth information to the AMF, and the AMF sends seventh information to the second communication device, where the sixth information and the seventh information include part or all of the content in the first information. Optionally, the content of the sixth information may be configured based on the content of the first information, and the content in the seventh information may be configured based on the content in the first information or the sixth information. The second communication device receives part or all of the content in the first information via interaction with the AMF, interaction between the AMF and the GMLC, and interaction between the GMLC and the first communication device.

In one implementation of the present application, that the second communication device sends second information to the first communication device includes:
the second communication device sends the second information to the first communication device via a fourth communication device.

For example, the fourth communication device includes a GMLC or an AMF, for example, the second communication device sends the second information to the first communication device via the GMLC, or for example, the second communication device sends part or all of the content of the second information to the first communication device via the AMF and GMLC. For example, the second communication device sends the second information to the AMF, the AMF sends eighth information to the GMLC, and the GMLC sends ninth information to the first communication device, where the content of the eighth information may be configured based on the content of the second information, and the content in the ninth information may be configured based on the content in the eighth information or the second information. The second communication device sends part or all of the content of the second information to the first communication device via interaction with the AMF, interaction between the GMLC and the AMF, and interaction between the GMLC and the first communication device.

In one implementation of the present application, the second information further includes at least one of the following: (1) to (3).
(1) Data type corresponding to the location-related data.
(2) Device corresponding to the location-related data.

Optionally, the device corresponding to the location-related data includes at least one of the following: an RAN node, a PRU, a terminal, and an LMF.

(3) Collection manner corresponding to the location-related data.

Optionally, the second information further includes filter information corresponding to the location-related data.

In one implementation of the present application, the location-related data includes: numerical information of the location-related data.

In one implementation of the present application, the data type includes at least one of the following: (1) to (5).
(1) Positioning measurement data.

Optionally, the positioning measurement data includes at least one of the following: channel impulse response, power delay profile, delay profile, reference signal received power, reference signal received power path, and received signal time difference.

(2) Location information accuracy.

(3) Location information.

(4) Intermediate feature data, the intermediate feature data being data obtained based on measurement data for generating location information.

Optionally, the intermediate feature data includes at least one of the following: arrival time of the measurement signal, and path phase of the measurement signal.

(5) Positioning assistance data.

Optionally, the positioning assistance data includes at least one of the following: reference signal configuration information, radio signal configuration information, reference cell information, neighboring cell information, and search time window of received signal time difference.

In this embodiment of the present application, the second communication device can feed back, according to the request or subscription of the first communication device, the location-related data corresponding to the third communication device to the first communication device, enabling the network side to obtain location-related data, and further enabling the network side to use the location-related data for operations such as model training.

Referring to FIG. 4, an embodiment of the present application provides a transmission method applied to a fourth communication device, with specific steps including: step 401, step 402, step 403, and step 404.

Step 401: The fourth communication device receives first information sent by a first communication device, the first information being used to request location-related data corresponding to a third communication device.

Optionally, the first information includes at least one of the following: third information, the third information being used to indicate a data type of the requested location-related data; fourth information, the fourth information being used to indicate information of a device that generates the location-related data; and fifth information, the fifth information being used to indicate a collection manner of the requested location-related data.

Optionally, the first information further includes at least one of the following:
(1) filter information of the location-related data, used to indicate conditions that the location-related data needs to satisfy;
(2) notification target address.
(3) tenth information, the tenth information being used to indicate that the type of the message carrying the first information is a request message;
(4) eleventh information, the eleventh information being used to indicate that the type of the message carrying the first information is a subscription message;
(5) subscription correlation identification;
(6) one or more UE identifiers (UE ID);
(7) group identifier (group ID); and
(8) identifier information of the third communication device.

That the fourth communication device receives first information sent by a first communication device can be understood as: the fourth communication device directly receives the first information sent by the first communication device, or the fourth communication device receives part or all of the content of the first information sent by the first communication device via another communication device (or via interaction between other communication devices).

Step 402: The fourth communication device sends the first information to a second communication device.

That the fourth communication device sends the first information to a second communication device can be understood as: the fourth communication device directly sends the first information to the second communication device, or the fourth communication device sends part or all of the content of the first information to the second communication device via another communication device (or via interaction between other communication devices).

Step 403: The fourth communication device receives second information from the second communication device, the second information including the location-related data corresponding to the third communication device;

That the fourth communication device receives second information from the second communication device can be understood as: the fourth communication device directly receives the second information sent by the second communication device, or the fourth communication device receives part or all of the content of the second information sent by the second communication device via another communication device (or via interaction between other communication devices).

Step 404: The fourth communication device sends the second information to the first communication device.

That the fourth communication device sends the second information to the first communication device can be understood as: the fourth communication device directly sends the second information to the first communication device, or the fourth communication device sends part or all of the content of the second information to the first communication device via another communication device (or via interaction between other communication devices).

In one implementation of the present application, the second information further includes at least one of the following: (1) to (3).
(1) Data type corresponding to the location-related data.
(2) Device corresponding to the location-related data.

Optionally, the device corresponding to the location-related data includes at least one of the following: an RAN node, a PRU, a terminal, and an LMF.

(3) Collection manner corresponding to the location-related data.

Optionally, the second information may further include: filter information corresponding to the location-related data.

In one implementation of the present application, the location-related data includes: numerical information of the location-related data.

In one implementation of the present application, the data type includes at least one of the following: (1) to (5).
(1) Positioning measurement data.

Optionally, the positioning measurement data includes at least one of the following: channel impulse response, power delay profile, delay profile, reference signal received power, reference signal received power path, and received signal time difference.

(2) Location information accuracy.

(3) Location information.

(4) Intermediate feature data, the intermediate feature data being data obtained based on measurement data for generating location information;

Optionally, the intermediate feature data includes at least one of the following: arrival time of the measurement signal, and path phase of the measurement signal.

(5) Positioning assistance data.

Optionally, the positioning assistance data includes at least one of the following: reference signal configuration information, radio signal configuration information, reference cell information, neighboring cell information, and search time window of received signal time difference.

In one implementation of the present application, the first communication device includes but is not limited to an NWDAF, an MTLF, or an AnLF, the second communication device includes but is not limited to an LMF, the third communication device includes but is not limited to a PRU or a terminal, and the fourth communication device includes but is not limited to a GMLC or an AMF.

In one implementation of the present application, the fourth communication device includes an AMF, and that the fourth communication device receives first information sent by a first communication device includes:
receiving, by the fourth communication device, the first information sent by the first communication device via a fifth communication device. Optionally, the fifth communication device is a GMLC.

For example, the GMLC receives the first information sent by the first communication device, and the GMLC sends part or all of the content of the first information to the AMF through sixth information. Optionally, the content in the sixth information may be configured based on the content in the first information.

In one implementation of the present application, the fourth communication device includes an AMF, and that the fourth communication device sends the second information to the first communication device includes:
sending, by the fourth communication device, part or all of the content of the second information to the first communication device via the fifth communication device. Optionally, the fifth communication device is a GMLC.

For example, the AMF sends part or all of the content of the second information to the GMLC through eighth information, and the GMLC sends part or all of the content of the second information to the first communication device through ninth information. Optionally, the content in the eighth information may be configured based on the content in the second information. Optionally, the content in the ninth information may be configured based on the content in the second information or the eighth information.

In one implementation of the present application, the fourth communication device includes a GMLC, and that the fourth communication device sends the first information to the second communication device includes:
sending, by the fourth communication device, the first information to the second communication device via a sixth communication device. Optionally, the sixth communication device is an AMF.

For example, the GMLC sends part or all of the content of the first information to the AMF through sixth information, and the AMF sends part or all of the content of the first information to the second communication device through seventh information. Optionally, the content in the seventh information may be configured based on the content in the first information or the sixth information.

In one implementation of the present application, the fourth communication device includes a GMLC, and that the fourth communication device receives second information from the second communication device includes:
receiving, by the fourth communication device, the second information from the second communication device via the sixth communication device. Optionally, the sixth communication device is an AMF.

For example, the second communication device sends the second information to the AMF, the AMF sends part or all of the content of the second information to the GMLC through eighth information, and the GMLC sends part or all of the content of the second information to the first communication device through ninth information. Optionally, the content in the ninth information may be configured based on the content in the second information or the eighth information.

In this embodiment of the present application, the first communication device may obtain the location-related data corresponding to the third communication device from the second communication device in a request or subscription manner, enabling the network side to obtain location-related data, and further enabling the network side to use the location-related data for operations such as model training.

The implementation of the present application is introduced below in conjunction with Embodiment 1 and Embodiment 2.

### Embodiment 1:

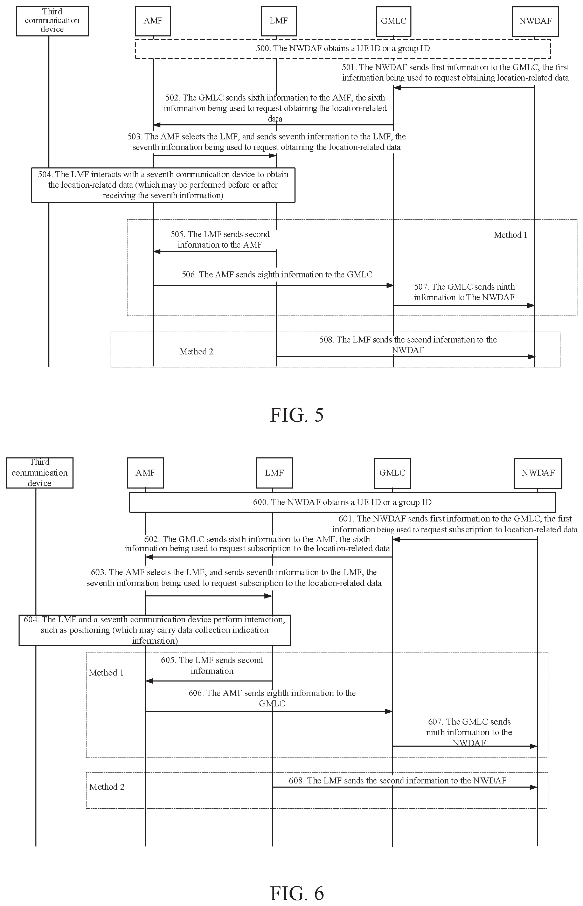

Referring to FIG. 5, the specific steps are as follows:
Step 500: An NWDAF obtains a UE identifier (UE identifier, UE ID) or a group ID.

The NWDAF may first obtain certain area information, and then convert the area information into UE identifier, group ID, and other information; where the UE ID is the identifier of the UE in the area, and the group ID is the identifier of the group to which the UE in the area belongs.

Optionally, the UE identifier includes at least one of a GPSI or an SUPI.

Optionally, the group ID includes but is not limited to an internal group identifier (Internal Group Identifier) or an external group identifier (External Group Identifier).

In one implementation, the NWDAF obtains the UE ID or group ID corresponding to certain area information by requesting a network element such as an AMF.

In another implementation, the NWDAF may also obtain the UE ID or group ID based on its internal logic or other ways, such as that carried by a specific network element acting as a consumer of a certain analytics (analytics) task when the network element requests the analytics task.

It should be noted that the execution of this step or subsequent steps may be triggered by the internal logic of the NWDAF or requests from another network element, such as a consumer requesting an analytics task; in such a scenario, the NWDAF does not have a model corresponding to the analytics task, and thus needs to collect data for model training.

Step 501: The NWDAF sends first information to a GMLC, the first information being used to request obtaining location-related data.

Specifically, the NWDAF may send the first information to the GMLC through services such as Ngmlc_Location_ProvideLocation, where the first information is used to request obtaining location-related data.

The location-related data may include data corresponding to the third communication device.

Optionally, the location-related data may include data generated by a seventh communication device.

Step 502: The GMLC sends sixth information to an AMF, the sixth information being used to request obtaining the location-related data and the like.

Specifically, the GMLC sends the sixth information to the AMF through Namf_Location_ProvidePositioningInfo based on the first information received in step 501. Optionally, the sixth information may include at least part of the content of the first information. Further, the content of the sixth information may be configured based on the content of the first information, for example, the sixth information may also include at least one of the following: (1) client type (client type), used to indicate the type of the communication device initiating the request, such as network function (Network Function, NF) network element type, and (2) required LCS quality of service (Quality of Service, QoS), used to indicate the conditions that need to be satisfied for performing the LCS service, for example, the required accuracy, such as the accuracy of the positioning result (Accuracy), including horizontal accuracy (Horizontal Accuracy) and vertical accuracy (Vertical Accuracy); and the required delay, such as no delay and low delay.

It should be noted that in step 502, the GMLC may verify the privacy information of the UE based on the UE ID or group ID in the first information to determine whether the related data of the target UE may be reported, and so on.

Step 503: The AMF selects an LMF based on the sixth information, and sends seventh information to the selected LMF, the seventh information being used to request obtaining the location-related data and the like.

Specifically, the AMF may select the LMF based on information such as an area where the UE is located. After selecting the target LMF, the AMF sends the seventh information to the target LMF, where the seventh information may be sent through services such as Nlmf_Location_DetermineLocation. The content of the seventh information may include at least part of the content of the sixth information, and further, the content of the seventh information may be configured based on the content of the sixth information, for example, the AMF adds location service association identifier (LCS correlation ID) to the seventh information sent to the LMF, while omitting information such as the UE ID.

Optionally, the seventh information may include at least one of the following information:
(1) third information (or referred to as target data type);
(2) fourth information (or referred to as information of the target device);
(3) fifth information (or referred to as target collection manner);
(4) filter information of the location-related data, used to indicate conditions that the location-related data needs to satisfy;
(5) notification target address (Notification Target Address);
(6) tenth information, the tenth information being used to indicate that the type of the message carrying the first information is a request message;
(7) eleventh information, the eleventh information being used to indicate that the type of the message carrying the first information is a subscription message;
(8) subscription correlation identification;
(9) one or more UE identifiers (UE ID);
(10) group identifier (group ID); and
(11) identifier information of the third communication device.

Step 504: The LMF interacts with a seventh communication device to obtain the location-related data.

Specifically, the LMF may interact with the seventh communication device, for example, positioning, and obtain the location-related data during the interaction process. For example, during the positioning process, the LMF obtains measurement data of the seventh communication device and the like; or obtains location information and other data of the seventh communication device; or before performing positioning, the LMF first interacts with the seventh communication device to obtain some assistance data and the like.

Optionally, the seventh communication device may include at least one of an RAN, UE, a PRU, and an LMF.

It should be noted that step 504 may be performed before the LMF receives the seventh information, or after the seventh information and before the LMF sends the second information. Based on the information carried in the seventh information (such as the second information, sixth information, or ninth information), the LMF may determine the number of interactions with the seventh communication device (such as an RAN, UE, and a PRU) or the interaction time. For example, the LMF may store the location-related data locally, and after receiving the seventh information, report the location-related data in a case of determine that the current local/historical location-related data satisfies the indication of the information carried in the seventh information; for example, when the data collection manner is non-active triggered data collection, or the filter information of the location-related data includes past time information (such as the past week), the LMF may select the location-related data corresponding to the third communication device based on historical data/local stored data; or when there is no or cannot store the location-related data locally, after receiving the seventh information, the LMF may immediately perform interaction based on the content of the seventh information to obtain the location-related data corresponding to the third communication device and report it, or report the collected location-related data corresponding to the third communication device after triggering positioning and other interaction operations in other ways, or periodically perform interaction and report the location-related data corresponding to the third communication device, or accumulate a certain amount of location-related data corresponding to the third communication device and then report it, and so on. For example, when the data collection manner is active triggered data collection, or the filter information of the location-related data includes future time information, the LMF may immediately perform one or more positioning and other interactions, and report the collected location-related data.

It should be noted that the terms historical data, historically generated data, local data, locally stored data, and the like in the present application have the same meaning and may be used interchangeably.

Optionally, the interaction may be a specified positioning operation, or other operations that can obtain location-related data and the like.

Steps 505 to 507: The LMF sends second information to the AMF, the AMF sends eighth information to the GMLC, the GMLC sends ninth information to the NWDAF, and so on, where the eighth information and ninth information may include at least part of the content of the second information. Further, the content in the eighth information may be configured based on the content in the second information, and the content in the ninth information may be configured based on the content in the second information or the eighth information.

Specifically, the LMF collects the location-related data corresponding to the third communication device based on the seventh information, and feeds back the location-related data that satisfies the conditions, for example, sending the location-related data to the AMF through the Nlmf_location_determineLocation Response service message, or directly sending it to the GMLC (when there is a GMLC address); or when the LMF sends the positioning-related data to the AMF, the AMF may send it to the GMLC through the Namf_Location_ProvidePositioningInfo Response service message; the GMLC feeds back to the NWDAF through Ngmlc_Location_ProvideLocation Response; and so on.

The location-related data includes: numerical information of the location-related data, and the numerical information may be a number and the like represented by the specified location-related data.

Optionally, the location-related data further includes at least one of the following: (1) to (4).
(1) Data name.
(2) Data type.

For example, it may be positioning measurement data, location information accuracy, location information, intermediate feature data, positioning assistance data, and the like; or it may alternatively be a specific data type, such as RSRP, PDP, and CIR; or it may alternatively be a combination of the two, such as positioning measurement data and CIR; global navigation satellite system (Global Navigation Satellite System, GNSS) data; and the like.

(3) Time information.

The time information is a time corresponding to the location-related data that needs to be fed back, such as a time when the location-related data is generated, a time when the location-related data is collected, or the like.

(4) Data source information.

Optionally, the data source information is used to indicate that it is the location-related data generated by the PRU; or the data source information is used to indicate that it is the location-related data generated by the UE or LMF; or the data source information is used to indicate that it is the location-related data generated by the RAN node.

Optionally, step 508: The LMF sends the second information to the NWDAF.

Step 508 and steps 505 to 507 are two different ways for the LMF to feed back location-related data. After step 504, steps 505 to 507 may be executed, or step 508 may also be executed.

### Embodiment 2:

Referring to FIG. 6, the specific steps are as follows:
Step 600: An NWDAF obtains a UE ID or a group ID.
Step 601: The NWDAF sends first information to a GMLC, the first information being used to request subscription to location-related data.

Specifically, the NWDAF may send the first information to the GMLC through services such as Ngmlc_Location_ProvideLocation, where the first information is used to request obtaining location-related data.

The location-related data may include data corresponding to the third communication device.

Step 602: The GMLC sends sixth information to an AMF, the sixth information being used to request subscription to location-related data and the like. Optionally, the sixth information may include at least part of the content of the first information. Further, the content of the sixth information may be configured based on the content of the first information.

Step 603: The AMF selects an LMF based on the sixth information, and sends seventh information to the selected LMF, the seventh information being used to request subscription to location-related data and the like; where the sixth information and seventh information include at least part of the content carried by the first information. Optionally, the content of the seventh information may be configured based on the content of the first information or the sixth information.

Step 604: The LMF interacts with a seventh communication device to obtain the location-related data.

Optionally, the seventh communication device may include at least one of an RAN, UE, a PRU, and an LMF.

Steps 605 to 607: The LMF sends second information to the AMF, the AMF sends eighth information to the GMLC, the GMLC sends ninth information to the NWDAF, and so on, where the eighth information and ninth information may include at least part of the content of the second information. Further, the content in the eighth information may be configured based on the content in the second information, and the content in the ninth information may be configured based on the content in the second information or the eighth information.

Optionally, step 608: The LMF sends the second information to the NWDAF.

Step 608 and steps 605 to 607 are two different ways for the LMF to feed back location-related data. After step 604, steps 605 to 607 may be executed, or step 608 may also be executed.

The difference between Embodiment 2 and Embodiment 1 is that in Embodiment 2, the first information sent by the NWDAF is a subscription message. Therefore, in steps 601 to 603, the first information, the sixth information, and the seventh information need to carry parameters required for subscribing to location-related data; the reporting conditions for the location-related data in step 604 are also different from the reporting conditions for the location-related data in step 504, and the location-related data may be reported after the interaction and the like are performed; and the messages carrying the location-related data in steps 605 to 607 are also different from the messages carrying the location-related data in steps 505 to 507, for example, not a response (response) message corresponding to the request message, but a message corresponding to the subscription message, such as a notification (notify) message.

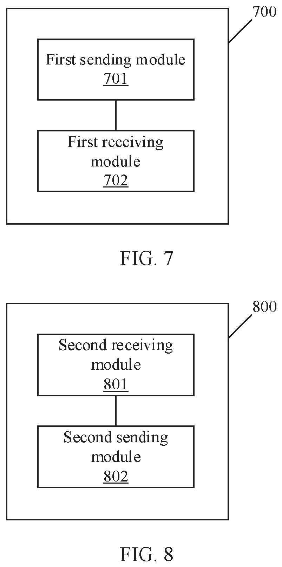

Referring to FIG. 7, an embodiment of the present application provides a transmission apparatus applied to a first communication device, the apparatus 700 including:
a first sending module 701, configured to send first information to a second communication device, the first information being used to request location-related data corresponding to a third communication device; and
a first receiving module 702, configured to receive second information from the second communication device, the second information including the location-related data corresponding to the third communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

Optionally, the first information further includes at least one of the following:
(1) filter information of the location-related data, used to indicate conditions that the location-related data needs to satisfy;
(2) notification target address (Notification Target Address).
(3) tenth information, the tenth information being used to indicate that the type of the message carrying the first information is a request message;
(4) eleventh information, the eleventh information being used to indicate that the type of the message carrying the first information is a subscription message;
(5) subscription correlation ID (subscription correlation ID) or notification correlation ID (Notification Correlation ID);
(6) one or more UE identifiers (UE ID);
(7) group identifier (group ID); and
(8) identifier information of the third communication device.

In one implementation of the present application, the first sending module 701 is further configured to: send the first information to the second communication device via a fourth communication device.

In one implementation of the present application, the first receiving module 702 is further configured to: receive the second information from the second communication device via the fourth communication device.

In one implementation of the present application, the second information further includes at least one of the following: (1) to (3).
(1) Data type corresponding to the location-related data.
(2) Device corresponding to the location-related data.

Optionally, the device corresponding to the location-related data includes at least one of the following: an RAN node, a PRU, a terminal, and an LMF.

(3) Collection manner corresponding to the location-related data.

Optionally, the second information may further include: filter information corresponding to the location-related data.

In one implementation of the present application, the location-related data includes: numerical information of the location-related data.

In one implementation of the present application, the data type includes at least one of the following:
(1) positioning measurement data;
(2) location information accuracy;
(3) location information;
(4) intermediate feature data, the intermediate feature data being data obtained based on measurement data for generating location information; and
(5) positioning assistance data.

In one implementation of the present application, the apparatus further includes:
a processing module, configured to perform model training related to positioning service based on the location-related data, or perform model inference related to positioning service based on the location-related data.

In one implementation of the present application, the first communication device includes an NWDAF, an MTLF, or an AnLF, or the second communication device includes an LMF, or the third communication device includes a PRU or a terminal.

In one implementation of the present application, the fourth communication device includes a GMLC or an AMF.

The apparatus provided in this embodiment of the present application can implement each process implemented by the method embodiment in FIG. 2, with the same technical effects achieved. To avoid repetition, details are not described herein.

Referring to FIG. 8, an embodiment of the present application provides a transmission apparatus applied to a second communication device, the apparatus 800 including:
a second receiving module 801, configured to receive first information from a first communication device, the first information being used to request location-related data corresponding to a third communication device; and
a second sending module 802, configured to send second information to the first communication device, the second information including the location-related data corresponding to the third communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

In one implementation of the present application, the second receiving module 801 is further configured to: receive the first information from the first communication device via a fourth communication device.

In one implementation of the present application, the second sending module 802 is further configured to: send the second information to the first communication device via a fourth communication device.

In one implementation of the present application, the second information further includes at least one of the following:
data type corresponding to the location-related data;
device corresponding to the location-related data; and
collection manner corresponding to the location-related data.

Optionally, the device corresponding to the location-related data includes at least one of the following: an RAN node, a PRU, a terminal, and an LMF.

In one implementation of the present application, the location-related data includes: numerical information of the location-related data.

In one implementation of the present application, the data type includes at least one of the following:
location information accuracy;
location information;
intermediate feature data, the intermediate feature data being data obtained based on measurement data for generating location information; and
positioning assistance data.

In one implementation of the present application, the apparatus further includes: an obtaining module, configured to obtain the location-related data based on the first information.

In one implementation of the present application, the first communication device includes an NWDAF, an MTLF, or an AnLF, or the second communication device includes an LMF, or the third communication device includes a PRU or a terminal.

In one implementation of the present application, the fourth communication device includes a GMLC or an AMF.

The apparatus provided in this embodiment of the present application can implement each process implemented by the method embodiment in FIG. 3, with the same technical effects achieved. To avoid repetition, details are not described herein.

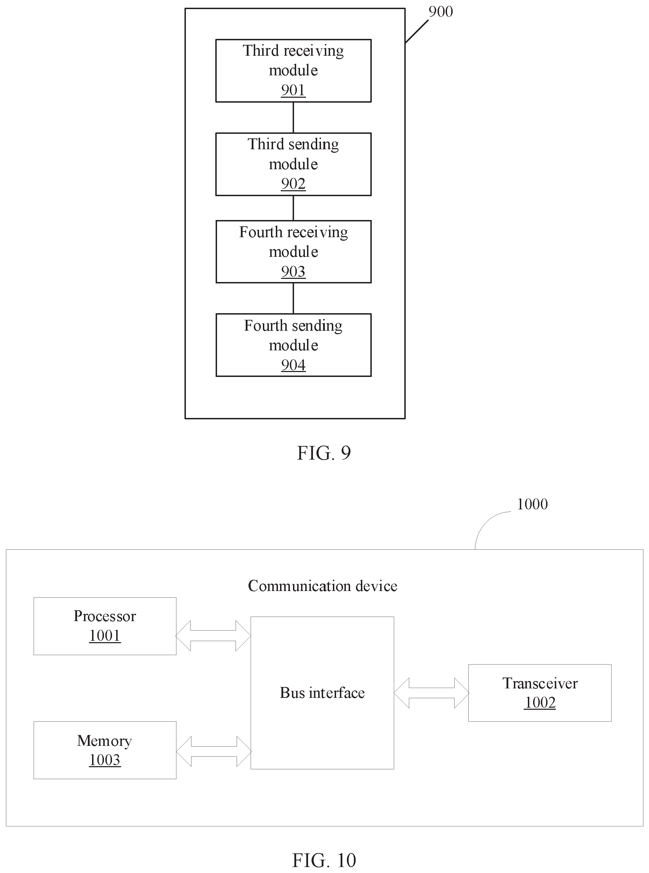

Referring to FIG. 9, an embodiment of the present application provides a transmission apparatus applied to a fourth communication device, the apparatus 900 including:
a third receiving module 901, configured to receive first information sent by a first communication device, the first information being used to request obtaining or requesting subscription to location-related data corresponding to a third communication device;
a third sending module 902, configured to send the first information to a second communication device;
a fourth receiving module 903, configured to receive second information from the second communication device, the second information including the location-related data corresponding to the third communication device; and
a fourth sending module 904, configured to send the second information to the first communication device; where
the first information includes at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

In one implementation of the present application, the second information further includes at least one of the following:
data type corresponding to the location-related data;
device corresponding to the location-related data; and
collection manner corresponding to the location-related data.

Optionally, the collection manner includes at least one of the following: non-active data collection; active data collection; historical data collection; immediate data collection; and future data collection.

Optionally, the device corresponding to the location-related data includes at least one of the following: an RAN node, a PRU, a terminal, and an LMF.

In one implementation of the present application, the location-related data includes: numerical information of the location-related data.

In one implementation of the present application, the data type includes at least one of the following:
positioning measurement data;
location information accuracy;
location information;
intermediate feature data, the intermediate feature data being data obtained based on measurement data for generating location information; and
positioning assistance data.

In one implementation of the present application, the first communication device includes an NWDAF, an MTLF, or an AnLF, or the second communication device includes an LMF, or the third communication device includes a PRU or a terminal, and the fourth communication device includes a GMLC or an AMF.

In one implementation of the present application, the fourth communication device includes an AMF, and the third receiving module 901 is further configured to: receive the first information sent by the first communication device via a fifth communication device.

Optionally, the receiving the first information sent by the first communication device via a fifth communication device includes:
receiving sixth information sent by the fifth communication device, the content of the sixth information being determined based on the content of the first information; and sending seventh information to the second communication device, the content of the seventh information being determined based on the content of the sixth information.

For example, the manner in which the fourth communication device determines the seventh information based on the sixth information includes:
(1) the fourth communication device determines that at least part of the content in the seventh information is unnecessary to modify based on the sixth information, and may be retained, and so on; and
(2) the fourth communication device determines that at least part of the content in the seventh information needs to be modified, deleted, or the like based on the sixth information.

For example, part of the content of the sixth information is retained in the seventh information, other content in the sixth information is deleted, and new information may also be added to the seventh information, for example, the newly added information may also be generated based on the content of the sixth information. For example, the fourth communication device converts the UE identifier information or group identifier information into a location service association identifier (LCS correlation ID) based on the UE identifier information or group identifier information in the sixth information, and retains the location service association identifier in the seventh information, that is, the seventh information includes at least part of the content of the sixth information and the location service association identifier. It should be noted that the location service association identifier corresponds to the UE identifier information or group identifier information.

It should be noted that the manner of determining the content of the sixth information is similar to the above description, and is not repeated herein.

In one implementation of the present application, the fourth communication device includes an AMF, and the fourth sending module 904 is further configured to: send the second information to the first communication device via the fifth communication device.

Optionally, the sending the second information to the first communication device via the fifth communication device includes: receiving the second information sent by the second communication device; and sending ninth information to the fifth communication device, the ninth information being determined based on the content of the second information.

The method for determining the content of the ninth information is similar to the above method. For example, the fourth communication device can convert the LCS correlation ID in the second information into UE identifier or group identifier and other information, for example, delete the LCS correlation ID in the second information, and add corresponding UE identifier or group identifier and other information, thereby generating the ninth information.

In one implementation of the present application, the fourth communication device includes a GMLC, and the third sending module 902 is further configured to: send the first information to the second communication device via a sixth communication device;

Optionally, the sixth communication device may include but is not limited to an AMF.

In one implementation of the present application, the fourth communication device includes a GMLC, and the fourth sending module 904 is further configured to: receive the second information from the second communication device via the sixth communication device.

The apparatus provided in this embodiment of the present application can implement the processes implemented by the method embodiment in FIG. 4, with the same technical effects achieved. To avoid repetition, details are not described herein again.

Referring to FIG. 10, FIG. 10 is a structural diagram of a communication device applied in an embodiment of the present invention.

As shown in FIG. 10, the communication device 1000 includes a processor 1001, a transceiver 1002, a memory 1003, and a bus interface. The processor 1001 may be responsible for managing a bus architecture and general processing. The memory 1003 may store data that the processor 1001 uses when performing an operation.

In an embodiment of the present invention, the communication device 1000 further includes a program stored in the memory 1003 and capable of running on the processor 1001. When the program is executed by the processor 1001, the steps of the foregoing method shown in FIG. 2, FIG. 3, or FIG. 4 are implemented.

In FIG. 10, a bus architecture may include any quantity of interconnected buses and bridges, and specifically connect together various circuits of one or more processors represented by the processor 1001 and a memory represented by the memory 1003. The bus architecture may further interconnect various other circuits such as a peripheral device, a voltage regulator, and a power management circuit. These are all well known in the art, and therefore are not further described in this specification. The bus interface provides interfaces. The transceiver 1002 may be a plurality of components, including a transmitter and a receiver, and provides units for communicating with a variety of other apparatuses via a transmission medium.

In one implementation of the present application, the transceiver 1002 is configured to send first information to a second communication device, the first information being used to request location-related data corresponding to a third communication device; and
the transceiver 1002 is further configured to receive second information from the second communication device, the second information including the location-related data corresponding to the third communication device; where
the first information includes at least one of the following: third information, the third information being used to indicate a data type of the requested location-related data; fourth information, the fourth information being used to indicate information of a device that generates the location-related data; and fifth information, the fifth information being used to indicate a collection manner of the requested location-related data.

In another implementation of the present application, the transceiver 1002 is configured to receive first information from a first communication device, the first information being used to request location-related data corresponding to a third communication device; and
the transceiver 1002 is further configured to send second information to the first communication device, the second information including the location-related data corresponding to the third communication device; where
the first information includes at least one of the following: third information, the third information being used to indicate a data type of the requested location-related data; fourth information, the fourth information being used to indicate information of a device that generates the location-related data; and fifth information, the fifth information being used to indicate a collection manner of the requested location-related data.

In yet another implementation of the present application, the transceiver 1002 is configured to receive first information sent by a first communication device, the first information being used to request location-related data corresponding to a third communication device;
the transceiver 1002 is further configured to send the first information to a second communication device;
the transceiver 1002 is further configured to receive second information from the second communication device, the second information including the location-related data corresponding to the third communication device; and
the transceiver 1002 is further configured to send the second information to the first communication device; where
the first information includes at least one of the following: third information, the third information being used to indicate a data type of the requested location-related data; fourth information, the fourth information being used to indicate information of a device that generates the location-related data; and fifth information, the fifth information being used to indicate a collection manner of the requested location-related data.

The foregoing communication device provided in this embodiment of the present application is capable of implementing the processes implemented in the method embodiment shown in FIG. 2, FIG. 3, or FIG. 4, with the same technical effects achieved. To avoid repetition, details are not described herein again.

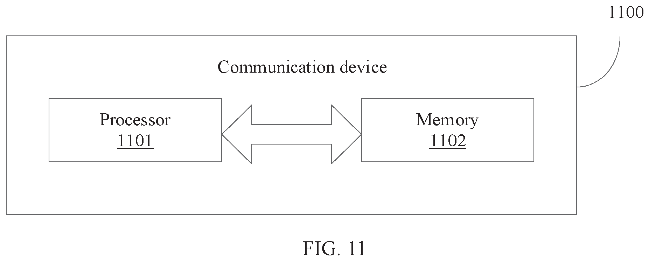

Referring to FIG. 11, FIG. 11 is a structural diagram of a communication device applied in an embodiment of the present invention.

As shown in FIG. 11, an embodiment of the present application further provides a communication device 1100 including a processor 1101 and a memory 1102, where the memory 1102 stores a program or instructions capable of running on the processor 1101, and when the program or instructions are executed by the processor 1101, the steps of the foregoing method embodiment shown in FIG. 2, FIG. 3, or FIG. 4 are implemented, with the same technical effects achieved. To avoid repetition, details are not repeated herein.

An embodiment of the present application further provide a readable storage medium, where the readable storage medium stores a program or instructions, and when the program or instructions are executed by a processor, the processes of the foregoing method and various embodiments shown in FIG. 2, FIG. 3, or FIG. 4 are implemented, with the same technical effects achieved. To avoid repetition, details are not described herein again.

The processor is the processor in the communication device in the foregoing embodiments. The readable storage medium includes a computer-readable storage medium, such as a computer read-only memory (Read-Only Memory, ROM), a random access memory (Random Access Memory, RAM), a magnetic disk, or an optical disc. In some examples, the readable storage medium may be a non-transitory readable storage medium.

An embodiment of the present application further provides a chip. The chip includes a processor and a communication interface. The communication interface is coupled to the processor. The processor is configured to run a program or instructions, to implement the processes of the method and various embodiments shown in FIG. 2, FIG. 3, or FIG. 4, with the same technical effects achieved. To avoid repetition, details are not described herein again.

It should be understood that the chip mentioned in this embodiment of the present application may also be referred to as a system-on-chip, a system chip, a system-on-a-chip, or a system on a chip, or the like.

An embodiment of the present application further provides a computer program/program product, where the computer program/program product is stored in a storage medium, and the computer program/program product is executed by at least one processor to implement the processes of the method and various embodiments shown in FIG. 2, FIG. 3, or FIG. 4, with the same technical effects achieved. To avoid repetition, details are not described herein again.

An embodiment of the present application further provides a communication system, where the communication system includes a communication device, and the communication device is configured to execute the various processes of the method and various embodiments shown in FIG. 2, FIG. 3, or FIG. 4, with the same technical effect achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of the present application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. This computer software product is stored in a storage medium (such as ROM, RAM, magnetic disk, or optical disk) and includes a number of instructions to enable the terminal or the communication device to execute the methods described in the various embodiments of the present application.

The foregoing describes the embodiments of the present application with reference to the accompanying drawings. However, the present application is not limited to the foregoing specific embodiments. The foregoing specific embodiments are merely illustrative rather than restrictive. As instructed by the present application, persons of ordinary skill in the art may further devise many forms of embodiments without departing from principles of the present application and the protection scope of the claims, and all these embodiments fall within the protection scope of the present application.

## Claims

1. A transmission method, comprising:
sending, by a first communication device, first information to a second communication device, the first information being used to request location-related data corresponding to a third communication device; and
receiving, by the first communication device, second information from the second communication device, the second information comprising the location-related data corresponding to the third communication device; wherein
the first information comprises at least one of the following information:
third information, the third information being used to indicate a data type of the requested location-related data;
fourth information, the fourth information being used to indicate information of a device that generates the location-related data; and
fifth information, the fifth information being used to indicate a collection manner of the requested location-related data.

2. The method according to claim 1, wherein the sending, by a first communication device, first information to a second communication device comprises:
sending, by the first communication device, the first information to the second communication device via a fourth communication device;
or
the receiving, by the first communication device, second information from the second communication device comprises:
receiving, by the first communication device, the second information from the second communication device via the fourth communication device.

3. The method according to claim 1 or 2, wherein the second information further comprises at least one of the following:
a data type corresponding to the location-related data;
a device corresponding to the location-related data; and
a collection manner corresponding to the location-related data.

4. The method according to claim 1 or 3, wherein the collection manner comprises at least one of the following: non-active data collection; active data collection; historical data collection; immediate data collection; and future data collection.

5. The method according to any one of claims 1 to 3, wherein the location-related data comprises: numerical information corresponding to the location-related data.

6. The method according to claim 1 or 3, wherein the data type comprises at least one of the following:
positioning measurement data;
location information accuracy;
location information;
intermediate feature data, the intermediate feature data being data obtained based on measurement data for generating location information; and
positioning assistance data.

7. The method according to claim 6, wherein the positioning measurement data comprises at least one of the following: channel impulse response, power delay profile, delay profile, reference signal received power, reference signal received power path, and received signal time difference.

8. The method according to claim 6, wherein the intermediate feature data comprises at least one of the following: arrival time of a measurement signal, and path phase of a measurement signal.

9. The method according to claim 6, wherein the positioning assistance data comprises at least one of the following: reference signal configuration information, radio signal configuration information, reference cell information, neighboring cell information, and search time window of received signal time difference.

10. The method according to claim 1, wherein the method further comprises:
performing, by the first communication device, model training related to positioning service based on the location-related data;
or
performing, by the first communication device, model inference related to positioning service based on the location-related data.

11. The method according to claim 1, wherein the first communication device comprises a network data analytics function NWDAF, a model training logic function MTLF, or an analytic logic function AnLF; or
the second communication device comprises a location management function LMF; or
the third communication device comprises a positioning reference unit PRU or a terminal.

12. The method according to claim 2, wherein the fourth communication device comprises a gateway mobile location center GMLC or an access and mobility management function AMF.

13. The method according to claim 3, wherein the device corresponding to the location-related data comprises at least one of the following: a radio access network RAN node, a PRU, a terminal, and an LMF.

14. A transmission method, comprising:
receiving, by a second communication device, first information from a first communication device, the first information being used to request location-related data corresponding to a third communication device; and
sending, by the second communication device, second information to the first communication device, the second information comprising the location-related data corresponding to the third communication device; wherein
the first information comprises at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

15. The method according to claim 14, wherein the receiving, by a second communication device, first information from a first communication device comprises:
receiving, by the second communication device, the first information from the first communication device via a fourth communication device;
or
the sending, by the second communication device, second information to the first communication device comprises:
sending, by the second communication device, the second information to the first communication device via a fourth communication device.

16. The method according to claim 14 or 15, wherein the second information further comprises at least one of the following:
a data type corresponding to the location-related data;
a device corresponding to the location-related data; and
a collection manner corresponding to the location-related data.

17. The method according to claim 16, wherein the device corresponding to the location-related data comprises at least one of the following: an RAN node, a PRU, a terminal, and an LMF.

18. The method according to any one of claims 14 to 17, wherein the location-related data comprises numerical information of the location-related data.

19. The method according to claim 14 or 16, wherein the data type comprises at least one of the following:
positioning measurement data;
location information accuracy;
location information;
intermediate feature data, the intermediate feature data being data obtained based on measurement data for generating location information; and
positioning assistance data.

20. The method according to claim 19, wherein the positioning measurement data comprises at least one of the following: channel impulse response, power delay profile, delay profile, reference signal received power, reference signal received power path, and received signal time difference.

21. The method according to claim 19, wherein the intermediate feature data comprises at least one of the following: arrival time of a measurement signal, and path phase of a measurement signal.

22. The method according to claim 19, wherein the positioning assistance data comprises at least one of the following: reference signal configuration information, radio signal configuration information, reference cell information, neighboring cell information, and search time window of received signal time difference.

23. The method according to claim 14, wherein before the sending, by the second communication device, second information to the first communication device, the method further comprises:
obtaining, by the second communication device, the location-related data based on the first information.

24. The method according to claim 14, wherein the first communication device comprises an NWDAF, an MTLF, or an AnLF; or
the second communication device comprises an LMF; or
the third communication device comprises a PRU or a terminal.

25. The method according to claim 15, wherein the fourth communication device comprises a GMLC or an AMF.

26. A transmission method, comprising:
receiving, by a fourth communication device, first information sent by a first communication device, the first information being used to request location-related data corresponding to a third communication device;
sending, by the fourth communication device, the first information to a second communication device;
receiving, by the fourth communication device, second information from the second communication device, the second information comprising the location-related data corresponding to the third communication device; and
sending, by the fourth communication device, the second information to the first communication device; wherein
the first information comprises at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

27. The method according to claim 26, wherein the second information further comprises at least one of the following:
a data type corresponding to the location-related data;
a device corresponding to the location-related data; and
a collection manner corresponding to the location-related data.

28. The method according to claim 27, wherein the device corresponding to the location-related data comprises at least one of the following: an RAN node, a PRU, a terminal, and an LMF.

29. The method according to any one of claims 26 to 28, wherein the location-related data comprises numerical information of the location-related data.

30. The method according to claim 26 or 27, wherein the data type comprises at least one of the following:
positioning measurement data;
location information accuracy;
location information;
intermediate feature data, the intermediate feature data being data obtained based on measurement data for generating location information; and
positioning assistance data.

31. The method according to claim 26, wherein the first communication device comprises an NWDAF, an MTLF, or an AnLF; or
the second communication device comprises an LMF; or
the third communication device comprises a PRU or a terminal; or
the fourth communication device comprises a GMLC or an AMF.

32. The method according to claim 31, wherein the fourth communication device comprises AMF, and the receiving, by a fourth communication device, first information sent by a first communication device comprises:
receiving, by the fourth communication device, the first information sent by the first communication device via a fifth communication device; and
the sending, by the fourth communication device, the second information to the first communication device comprises:
sending, by the fourth communication device, the second information to the first communication device via the fifth communication device.

33. The method according to claim 32, wherein the receiving, by the fourth communication device, the first information sent by the first communication device via a fifth communication device comprises:
receiving, by the fourth communication device, sixth information sent by the fifth communication device, content of the sixth information being determined based on content of the first information; and
sending, by the fourth communication device, seventh information to the second communication device, content of the seventh information being determined based on the content of the sixth information;
or
the sending, by the fourth communication device, the second information to the first communication device via the fifth communication device comprises:
receiving, by the fourth communication device, the second information sent by the second communication device; and
sending, by the fourth communication device, ninth information to the fifth communication device, the ninth information being determined based on content of the second information.

34. The method according to claim 31, wherein the fourth communication device comprises GMLC, and the sending, by the fourth communication device, the first information to the second communication device comprises:
sending, by the fourth communication device, the first information to the second communication device via a sixth communication device; and
the receiving, by the fourth communication device, second information from the second communication device comprises:
receiving, by the fourth communication device, the second information from the second communication device via the sixth communication device.

35. The method according to claim 34, wherein the sixth communication device comprises an AMF.

36. A transmission apparatus, comprising:
a first sending module configured to send first information to a second communication device, the first information being used to request location-related data corresponding to a third communication device;
a first receiving module configured to receive second information from the second communication device, the second information comprising the location-related data corresponding to the third communication device; wherein
the first information comprises at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

37. A transmission apparatus, comprising:
a second receiving module configured to receive first information from a first communication device, the first information being used to request location-related data corresponding to a third communication device;
a second sending module configured to send second information to the first communication device, the second information comprising the location-related data corresponding to the third communication device; wherein
the first information comprises at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

38. A transmission apparatus, comprising:
a third receiving module configured to receive first information sent by a first communication device, the first information being used to request obtaining location-related data corresponding to a third communication device;
a third sending module configured to send the first information to a second communication device;
a fourth receiving module configured to receive second information from the second communication device, the second information comprising the location-related data corresponding to the third communication device; and
a fourth sending module configured to send the second information to the first communication device; wherein
the first information comprises at least one of the following information: third information, the third information being used to indicate a data type of the requested location-related data; fourth information, the fourth information being used to indicate information of a device that generates the location-related data; and fifth information, the fifth information being used to indicate a collection manner of the requested location-related data.

39. A communication device, comprising a processor and a memory, wherein the memory stores a program or instructions executable on the processor, and the program or instructions, when executed by the processor, implement the steps of the methods according to any one of claims 1 to 35.

40. A readable storage medium, wherein the readable storage medium stores a program or instructions, and the program or instructions, when executed by a processor of a communication device, implement the steps of the methods according to any one of claims 1 to 35.
